# EUROPEAN PATENT APPLICATION

(11) **EP 2 072 871 A2**
(43) Date of publication of application: **24.06.2009**
(21) Application number: 08168702.2
(22) Date of filing: 10.11.2008
(51) Int. Cl.: F16K 15/06

(54) **Check valve**

(30) Priority: 10.12.2007 JP 2007318049
(71) Applicant: MIURA CO., LTD., Matsuyama-shi Ehime-ken, Ehime (JP)
(72) Inventor: Takeda, Tomohisa, Ehime-ken, Ehime (JP)
(74) Representative: Higgs, Jonathan

(57) **Abstract**

To provide at low cost a check valve which is relatively lightweight and not limited in applicable range thereof, has a good sealing property, and exhibits excellent pressure resistance and durability, a valve chamber (5) is formed between a fluid inlet (3) and a fluid outlet (4) in a valve casing (2), a valve seat (7) is formed to have a valve hole (6) on a fluid inlet (3) side of the valve chamber (5), and a valve body (11) is provided in the valve chamber (5) so as to be movable in a direction in which fluid flows and to be brought into contact with the valve seat (7) from a fluid outlet (4) side, the valve body (11) including, when seen from the fluid inlet (3) side, a first valve body portion (11a) and a second valve body portion (11b) which respectively have a small diameter and a large diameter, the valve seat (7) including a first valve seat portion (7a) and a second valve seat portion (7b) with which the first valve body portion (11a) and the second valve body portion (11b) are brought into contact, respectively, in which the second valve body portion (11b) has a flexural modulus which is set to be lower than a flexural modulus of the first valve body portion (11a), and in which the first valve body portion (11a) has a mechanical strength which is set so that the first valve body portion (11a) can mechanically bear a pressure of fluid on the fluid outlet (4) side.

## Description

### BACKGROUND OF THE INVENTION

### 1. Field of the Invention

The present invention relates to a check valve for preventing back-flow of fluid.

### 2. Description of the Related Art

In an apparatus which uses fluid, a check valve is used to prevent back-flow of the fluid.

Examples of conventionally used valve bodies of the check valve include an elastic valve body made of an elastic material such as rubber and an inelastic valve body made of an inelastic material such as metal, the inelastic valve body being generally referred to as a metal seal.

In this context, although a check valve that relies solely on a seal effected by an elastic valve body provides a good sealing property, there is a problem of poor pressure resistance and lack of durability. Meanwhile, although a check valve that relies solely on a seal effected by an inelastic valve body exhibits excellent pressure resistance and durability, there is a problem in that, even a slight amount of refuse caught between a valve seat and the valve body can cause so-called refuse clogging, which can easily impair the sealing property and make fluid back-flow liable to occur.

In order to solve the above-mentioned problem with the check valve, there is proposed a check valve including a valve chamber formed between a fluid inlet and a fluid outlet in a valve casing, a valve seat formed on a fluid inlet side of the valve chamber, and a valve body provided in the valve chamber so as to be movable in a direction in which fluid flows and to be brought into contact with the valve seat from a fluid outlet side, the valve body including, when seen from the fluid inlet side, a first valve body portion made of an inelastic material and a second valve body portion made of an elastic material which respectively have a small diameter and a large diameter, the valve seat including a first valve seat portion and a second valve seat portion with which the first valve body portion and the second valve body portion are brought into contact, respectively (refer to Japanese Patent Application Laid-open No. 2001-349454, for example).

In the check valve having the above-mentioned structure, a good sealing property is attained by means of the second valve body portion made of an elastic material, which constitutes the valve body, and excellent pressure resistance and durability are attained by means of the first valve bodyportionmade of an inelastic material. That is, it is possible to attain a check valve capable of effectively preventing fluid back-flow when compared with the check valve which relies solely on the seal effected by the elastic valve body or the check valve that relies solely on the seal effected by the inelastic valve body.

However, in the check valve proposed in Japanese Patent Application Laid-open No. 2001-349454, the first valve body portion is made of an inelastic material, that is, made of metal. Thus, there is a problem in that the check valve is relatively heavyweight and limited in applicable range thereof, and is a factor of an increase in cost thereof.

### SUNIMARY OF THE INVENTION

In order to solve the above-mentioned problem, the inventor of the present invention has continuously conducted studies with reference to Japanese Patent Application Laid-open No. 2001-349454 and the like. As a result, the present invention was completed on the basis of the finding of the following: a pressure of the fluid through the fluid outlet of the check valve varies in each fluid apparatus; it suffices that the first valve body portion constituting the valve body has a mechanical strength and the pressure resistance so as to be capable of bearing at least the pressure of the fluid through the fluid outlet; and, unlike in the case of the check valve proposed in Japanese Patent Application Laid-open No. 2001-349454, the first valve body portion is not necessarily made of an inelastic material, that is, not necessarily made of metal.

It is therefore an object of the present invention to provide at low cost a check valve which is relatively lightweight and not limited in applicable range thereof, and has a good sealing property and exhibits excellent pressure resistance and durability.

A structure of the present invention capable of solving the above-mentioned problem is described as follows.

According to a first aspect of the present invention, there is provided a check valve including:
a valve chamber formed between a fluid inlet and a fluid outlet in a valve casing;
a valve seat formed to have a valve hole on a fluid inlet side of the valve chamber; and
a valve body provided in the valve chamber so as to be movable in a direction in which fluid flows and to be brought into contact with the valve seat from a fluid outlet side,
   the valve body including, when seen from the fluid inlet side, a first valve body portion and a second valve body portion which respectively have a small diameter and a large diameter,
   the valve seat including a first valve seat portion and a second valve seat portion with which the first valve body portion and the second valve body portion are brought into contact, respectively, characterized in that:
   the second valve body portion has a flexural modulus which is set to be lower than a flexural modulus of the first valve body portion; and
   the first valve body portion has a mechanical strength which is set so that the first valve body portion can mechanically bear a pressure of fluid on the fluid outlet side.

According to a second aspect of the present invention, the check valve of the first aspect is characterized in that the valve casing, the valve seat, the valve body, and an inside of the valve chamber are constituted by parts of one of the following,types:
the parts being made of a material having corrosion resistance and thermal resistance against fluid to be used; the parts being subj ected to corrosion resistance surface treatment and thermal resistance surface treatment.

According to a third aspect of the present invention, the check valve of the first or second aspect is characterized in that:
the first valve body portion is made of a resin having a high flexural modulus; and
the second valve body portion is made of a resin having a low flexural modulus.

According to a fourth aspect of the present invention, the check valve of the first or second aspect is characterized in that the first valve body portion and the second valve body portion are made of the same material,
the first valve body portion being formed to be thicker so as to be less easily bent when compared with the second valve body portion,
the second valve body portion being formed to be thinner so as to be more easily bent when compared with the first valve body portion.

According to a fifth aspect of the present invention, the check valve of the fourth aspect is characterized in that the first valve body portion and the second valve body portion are formed integrally with each other and made of the same material.

According to the first aspect of the present invention, in the check valve in which the valve body is constituted by the first valve body portion and the second valve body portion, the second valve body portion has the flexural modulus which is set to be lower than the flexural modulus of the first valve bodyportion. Therefore, the second valve body portion is easily bent so as to be deformable in conformity with a shape of a seat surface of the second valve seat portion, to thereby be reliably brought into close contact with the second valve seat portion. As a result, a good sealing property can be attained. The first valve body portion is set to have a mechanical strength so that the first valve body can mechanically bear the pressure of the fluid on the fluid outlet side. Therefore, in the state of being held in contact with the first valve seat portion, the first valve body portion is less easily bent so as to be capable of sufficiently bearing the pressure of the fluid on the fluid outlet side, in other words, is excellent in pressure resistance and durability.

In addition, it suffices that the first valve body portion has the mechanical strength so that the first valve body can mechanically bear the pressure of the fluid on the fluid outlet side. Therefore, the material thereof is not limited to metal, and a material can be selected and used therefor so that the first valve body can mechanically bear the pressure of the fluid on the fluid outlet side in accordance therewith. As a result, it is possible to form the first valve body portion so as to be relatively lightweight and not to be limited in applicable range thereof, and possible to select an inexpensive material therefor.

According to the second aspect of the present invention, in the check valve of the first aspect, the valve casing, the valve seat, the valve body, and an inside of the valve chamber are constituted by parts of one of the following types: the parts being made of a material having corrosion resistance and thermal resistance against fluid to be used; the parts being subjected to corrosion resistance surface treatment and thermal resistance surface treatment. Therefore, even when the fluid to be used includes chemicals or has high temperature, the fluid can be used without involving any problem.

According to the third aspect of the present invention, in the check valve of the first or second aspect, the first valve body portion is made of a resin having a high flexural modulus, and the second valve body portion is made of a resin having a low flexural modulus. Therefore, when a resin having corrosion resistance and thermal resistance against fluid to be used is selected, it is unnecessary to perform corrosion resistance surface treatment and thermal resistance surface treatment, which leads to facilitation of manufacture and reduction in weight.

According to the fourth aspect of the present invention, in the check valve of the first or second aspect, the first valve body portion and the second valve body portion are made of the same material, the first valve body portion being formed to be thicker than the second valve body portion so as to be less easily bent when compared therewith, the second valve body portion being formed to be thinner than the first valve body portion so as to be more easily bent when compared therewith. Therefore, even when the first valve body portion and the second valve body portion are made of the same material, the second valve body portion has a good sealing property and the first valve body portion exhibits excellent pressure resistance and durability. The first valve body portion and the second valve bodyportion are made of the same material, and hence it is unnecessary to prepare the material for each of the first valve body portion and the second valve body portion, which leads to facilitation of manufacture.

According to the fifth aspect of the present invention, in the check valve of the fourth aspect, the first valve body portion and the second valve body portion are formed integrally with each other and made of the same material. Therefore, the manufacture process is simplified and the assembly operation is facilitated when compared with those in the case of separately forming the first valve body portion and the second valve body portion.

### BRIEF DESCRIPTION OF THE DRAWINGS

In the accompanying drawings:
Fig. 1 is a longitudinal sectional view illustrating an example of a check valve in an opened state according to an embodiment of the present invention;
Fig. 2 is a right-hand side view of Fig. 1;
Fig. 3 is a longitudinal sectional view illustrating a valve body of this embodiment;
Fig. 4 is a longitudinal sectional view illustrating another example of the valve body of the check valve according to the present invention; and
Fig. 5 is a longitudinal sectional view illustrating still another example of the valve body of the check valve according to the present invention.

### DETAILED DESCRIPTION OF THE PREFERRED EMBODIMENTS

In the following, a best mode for carrying out the invention of a check valve is described in detail with reference to the figures illustrating an embodiment.

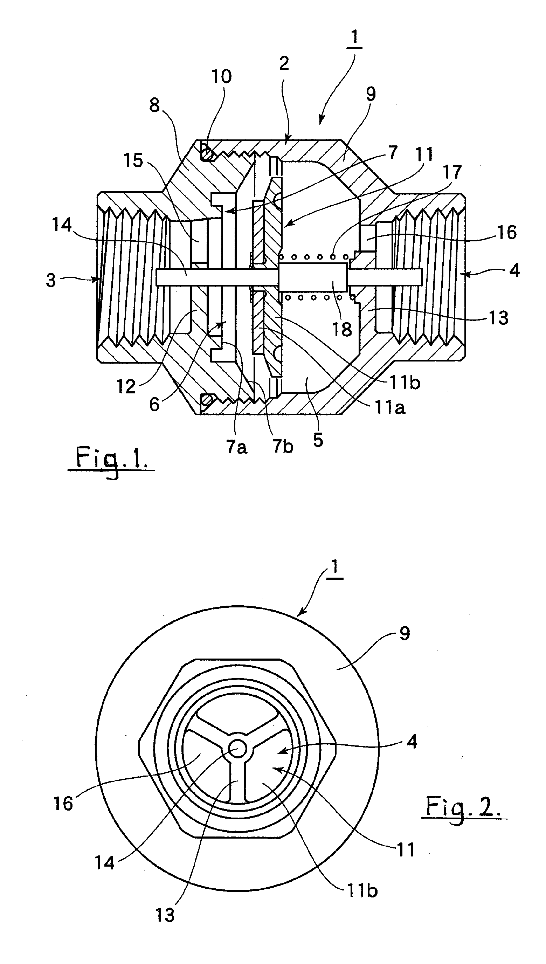

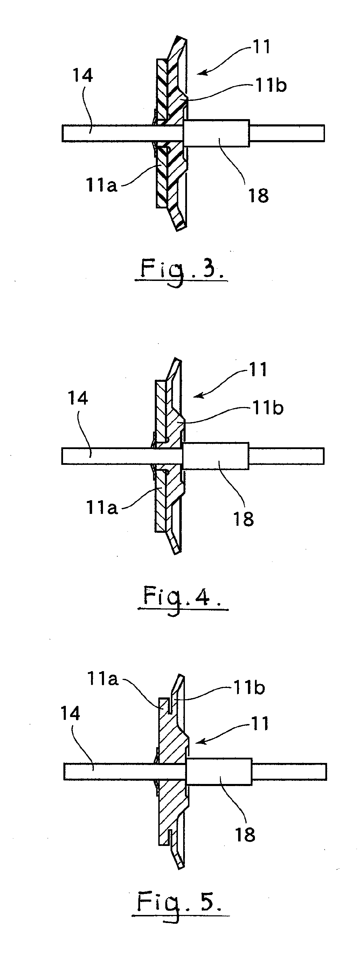

Fig. 1 is a longitudinal sectional view illustrating an example of a check valve in an opened state according to an embodiment of the present invention, Fig. 2 is a right-hand side view of Fig. 1, and Fig. 3 is a longitudinal sectional view illustrating a valve body of this embodiment.

A check valve 1 of this embodiment includes a valve chamber 5 formed between a fluid inlet 3 and a fluid outlet 4 within a valve casing 2, and a valve seat 7 having a valve hole 6 on the fluid inlet 3 side of the valve chamber 5. The valve casing 2 includes an inlet member 8 having the fluid inlet 3 and serving as a piping connection portion on the inflow side, and an outlet member 9 having the fluid outlet 4 and serving as a piping connection portion on the outflow passage side. The outlet member 9 is threadedly attached to the inlet member 8, with the valve chamber 5 being formed between the fluid inlet 3 of the inlet member 8 and the fluid outlet 4 of the outlet member 9. A seal member 10 is attached between the inlet member 8 and the outlet member 9.

The valve seat 7 which opens the valve hole 6 is formed in the inlet member 8 constituting the fluid inlet 3 side of the valve chamber 5, and a valve body 11 which is brought into contact with the valve seat 7 from the fluid outlet 4 side so as to effect valve closure is provided within the valve chamber 5 so as to be freely movable in the direction in which fluid flows.

The valve body 11 includes, when seen from the fluid inlet 3 side, a first valve body portion 11a and a second valve body portion 11b which have a small diameter and a large diameter, respectively. The valve seat 7 includes a first valve seat portion 7a with which the first valve body portion 11a is brought into contact and a second valve seat portion 7b with which the second valve body portion 11b is brought into contact before the first valve body portion 11a is brought into contact with the first valve seat portion 7a. The valve body 11 is fixed to a valve shaft 14 passing the center of the valve body 11, the valve shaft 14 having both end portions so as to be supported for being axially movable by shaft support portions 12 and 13 which are provided on the fluid inlet 3 side and the fluid outlet 4 side of the valve casing 2, respectively. The valve body 11 moves integrally with the valve shaft 14 so as to be brought into contact with and separated from the valve seat 7.

Regarding the first valve body portion 11a and the second valve body portion 11b constituting the valve body 11, a flexural modulus (which is calculated as follows: "flexural modulus = flexural stress/flexural strain" in the case of plastic material, for example, and similarly in the following) of the second valve body portion 11b of a large diameter is set to be lower than a flexural modulus of the first valve body portion 11a of a small diameter.

The second valve body portion 11b needs to have a flexural modulus which allows deformation for being brought into close contact with the seat surface of the second valve seat portion 7b in conformity with the shape thereof. The first valve body portion 11a needs to have a flexural modulus which provides a mechanical strength capable of mechanically bearing the pressure of fluid through the fluid outlet 4. However, the flexural modulus is not necessarily uniform. It suffices that the flexural modulus provides a mechanical strength capable of mechanically bearing the pressure of fluid through the fluid outlet 4 in accordance with the pressure of the fluid through the fluid outlet 4.

As long as having the flexural modulus as described above, materials of the first valve body portion 11a and the second valve body portion 11b are not particularly limited. In this embodiment, as illustrated in Fig. 3, the first valve body portion 11a is made of a resin having a high flexural modulus, and the second valve body portion 11b is made of a resin having a low flexural modulus.

Holes 15 and 16 for passing the fluid are respectively provided in the shaft support portions 12 and 13 which movably support the valve shaft 14 to which the valve body 11 is fixed. Further, a spring 17 for biasing the valve body 11 in the direction of being brought into contact with the valve seat 7 is interposed between the valve body 11 and the shaft support portion 13 provided on the fluid outlet 4 side. In the valve shaft 14, there is provided a stopper 18 for regulating the movement amount by which the valve body 11 moves to the fluid outlet 4 side upon receiving the fluid pressure from the fluid inlet 3 side and securing a flow path in the valve chamber 5. When the valve body 11 moves to a predetermined position, the stopper 18 is brought into contact with the shaft support portion 13 provided on the fluid outlet 4 side and supporting the valve shaft 14, thereby restricting further movement.

Further, in this embodiment, parts including the valve casing 2, the valve seat 7, the valve body 11, which constitute the check valve 1, and the shaft support portions 12 and 13, the valve shaft 14, the spring 17, and the stopper 18 which constitute the inside of the valve chamber 5, are made of a material having corrosion resistance and thermal resistance against a fluid to be used, or are subjected to corrosion resistance surface treatment and thermal resistance surface treatment.

In the check valve 1 having the above-mentioned structure of this embodiment, except the time of water supply, the valve body 11 is biased toward the fluid inlet 3 by the spring 17 so that the first valve body portion 11a is brought into contact with the first valve seat portion 7a and that the second valve body portion 11b is brought into contact with the second valve seat portion 7b. At the time of water supply, owing to the pressure of the fluid inflowing from the fluid inlet 3, the valve body 11 moves against the biasing force of the spring 17 toward the fluid outlet 4, whereby the valve hole 6 of the valve seat 7 is opened so that the fluid is passed therethrough to outflow from the fluid outlet 4 (Fig. 1).

Further, when the inflow of the fluid from the fluid inlet 3 is stopped, the valve body 11 receives the biasing force of the spring 17 and the pressure of the fluid on the fluid outlet 4 side so as to move toward the fluid inlet 3. First, the second valve body portion 11b is brought into contact with the second valve seat portion 7b, and then the first valve body portion 11a is brought into contact with the first valve seat portion 7a owing to the deformation of the second valve body portion 11b so that the valve hole 6 of the valve seat 7 is closed. As a result, the back-flow of the fluid on the fluid outlet 4 side is prevented.

In this case, regarding the first valve body portion 11a and the second valve body portion 11b constituting the valve body 11 in this embodiment, the second valve body portion 11b has a flexural modulus which is set to be lower than a flexural modulus of the first valve body portion 11a. Therefore, the second valve body portion 11b is easily bent so as to be deformed in conformity with the shape of the seat surface of the second valve seat portion 7b, to thereby be reliably brought into close contact with the second valve seat portion 7b.

In addition, the first valve body portion 11a, which has a flexural modulus higher than that of the second valve body portion 11b, has a mechanical strength capable of mechanically bearing a pressure of fluid on the fluid outlet 4 side. Therefore, the first valve body portion 11a is less easily bent so as to sufficiently bear the pressure of the fluid on the fluid outlet 4 side in the state of being held in contact with the first valve seat portion 7a.

Further, in this embodiment, the first valve body portion 11a is made of a resin having a high flexural modulus, and the second valve body portion 11b is made of a resin having a low flexural modulus. Therefore, when a resin having corrosion resistance and thermal resistance against fluid to be used is selected, it is unnecessary to perform corrosion resistance surface treatment and thermal resistance surface treatment, which leads to facilitation of manufacture and reduction in weight and cost.

Still further, in this embodiment, parts including the valve casing 2, the valve seat 7, the valve body 11 which constitute the check valve 1, and the shaft support portions 12 and 13, the valve shaft 14, the spring 17, and the stopper 18 which constitute the inside of the valve chamber 5, are made of a material having corrosion resistance and thermal resistance against fluid to be used, or are subjected to corrosion resistance surface treatment and thermal resistance surface treatment. Therefore, even when the fluid to be used includes chemicals or has high temperature, the fluid to be used can be used without involving any problem.

Figs. 4 and 5 are longitudinal sectional views each illustrating another example of the valve body of the check valve according to the present invention.

The valve body 11 illustrated in Fig. 4 is constituted by the first valve body portion 11a and the second valve body portion 11b which are made of the same material. In order that the first valve body portion 11a has a flexural modulus which is larger than a flexural modulus of the second valve body portion 11b, the first valve body portion 11a is formed to be thicker than the second valve body portion 11b so as to be less easily bent when compared therewith, and the second valve body portion 11b is formed to be thinner than the first valve body portion 11a so as to be more easily bent when compared therewith.

The second valve body portion 11b to be easily bent needs to have a small thickness so as to be deformable for being brought into contact with the second valve seat portion 7b and to be held in close contact therewith in conformity with the shape of the seat surface of the second valve seat portion 7b. Further, the first valve body portion 11a to be less easily bent needs to have a large thickness which provides a mechanical strength capable of mechanically bearing the pressure of fluid through the fluid outlet 4. In this embodiment, the first valve body portion 11a and the second valve body portion 11b are made of resins.

In the valve body 11 having the above-mentioned structure, even when the first valve body portion 11a and the second valve body portion 11b are made of the same material, the second valve body portion 11b is easily bent so as to be deformed in conformity with the shape of the seat surface of the second valve seat portion 7b, to thereby be reliably brought into close contact with the second valve seat portion 7b. Further, the first valve body portion 11a is capable of sufficiently bearing the pressure of the fluid on the fluid outlet 4 side in the state of being held in contact with the first valve seat portion 7a.

As in the case of the valve body 11 illustrated in Fig. 4, the valve body 11 illustrated in Fig. 5 is constituted by the first valve body portion 11a and the second valve body portion 11b which are formed integrally with each other of the same material. In order that the first valve body portion 11a has a flexural modulus which is larger than a flexural modulus of the second valve body portion 11b, the first valve body portion 11a is formed to be thicker than the second valve body portion 11b so as to be less easily bent when compared therewith, and the second valve body portion 11b is formed to be thinner than the first valve body portion 11a so as to be more easily bent when compared therewith.

The second valve body portion 11b to be easily bent needs to have a small thickness so as to be deformable for being brought into contact with the second valve seat portion 7b and to be held in close contact therewith in conformity with the shape of the seat surface of the second valve seat portion 7b. Further, the first valve body portion 11a to be less easily bent needs to have a large thickness having a mechanical strength capable of mechanically bearing the pressure of fluid through the fluid outlet 4. In this embodiment, the first valve body portion 11a and the second valve body portion 11b are made of resins.

In the valve body 11 having the above-mentioned structure, even when the first valve body portion 11a and the second valve body portion 11b are formed integrally with each other of the same material, the second valve body portion 11b is easily bent so as to be deformed in conformity with the shape of the seat surface of the second valve seat portion 7b, to thereby be reliably brought into close contact with the second valve seat portion 7b. Further, the first valve body portion 11a is capable of sufficiently bearing the pressure of the fluid on the fluid outlet 4 side in the state of being held in contact with the first valve seat portion 7a.

## Claims

1. A check valve, comprising:
a valve chamber (5) formed between a fluid inlet (3) and a fluid outlet (4) in a valve casing (2);
a valve seat (7) formed to have a valve hole (6) on a fluid inlet (3) side of the valve chamber (5); and
a valve body (11) provided in the valve chamber (5) so as to be movable in a direction in which fluid flows and to be brought into contact with the valve seat (7) from a fluid outlet (4) side,
the valve body (11) including, when seen from the fluid inlet (3) side, a first valve body portion (11a) and a second valve body portion (11b) which respectively have a small diameter and a large diameter,
the valve seat (7) including a first valve seat portion (7a) and a second valve seat portion (7b) with which the first valve bodyportion (11a) and the second valve body portion (11b) are brought into contact, respectively, **characterized in that**:
the second valve body portion (11b) has a flexural modulus which is set to be lower than a flexural modulus of the first valve body portion (11a); and
the first valve body portion (11a) has a mechanical strength which is set so that the first valve body portion (11a) can mechanically bear a pressure of fluid on the fluid outlet (4) side.

2. A check valve according to claim 1, **characterized in that** the valve casing (2), the valve seat (7), the valve body (11), and an inside of the valve chamber (5) are constituted by parts of a type of which are made of a material having corrosion resistance and thermal resistance against fluid to be used or a type of which are subjected to corrosion resistance surface treatment and thermal resistance surface treatment.

3. A check valve according to claim 1 or 2, **characterized in that**:
the first valve body portion (11a) is made of a resin having a high flexural modulus; and
the second valve body portion (11b) is made of a resin having a low flexural modulus.

4. A check valve according to claim 1 or 2, **characterized in that** the first valve body portion (11a) and the second valve body portion (11b) are made of the same material,
the first valve body portion (11a) being formed to be thicker so as to be less easily bent when compared with the second valve body portion (11b),
the second valve body portion (11b) being formed to be thinner so as to be more easily bent when compared with the first valve body portion (11a).

5. A check valve according to claim 4, **characterized in that** the first valve body portion (11a) and the second valve body portion (11b) are formed integrally with each other and made of the same material.
